# DEMANDE DE BREVET EUROPEEN

(11) **EP 0 839 667 A1**
(43) Date de publication de la demande: **06.05.1998**
(21) Numéro de dépôt: 97420203.8
(22) Date de dépôt: 03.11.1997
(51) Int. Cl.: B41M 1/10, B41M 7/00, C09D 11/10

(54) **Procédé d'impression par héliogravure avec des encres à faible teneur en solvants**

(30) Priorité: 05.11.1996 FR 9613707
(71) Demandeur: PECHINEY EMBALLAGE FLEXIBLE EUROPE, 92115 Clichy (FR)
(72) Inventeur: Philippe, Michel, 26500 Bourg Les Valence (FR)
(74) Mandataire: Pigasse, Daniel

(57) **Abrégé**

Le procédé comprend :
a) l'utilisation de cylindres gravés (1), et tramés assurant, par rotation desdits cylindres et à l'aide d'une racle, un transfert d'encre (6) entre un encrier (5) et un support à imprimer en bande (3),
b) l'utilisation d'encres liquides fluides chargées de matières colorantes, comprenant des monomères et oligomères liquides et des photo-initiateurs,
c) l'utilisation de moyens de séchage par polymérisation desdits monomères ou oligomères,
et est caractérisé en ce que:
1) on utilise des cylindres gravés à linéature élevée ayant de 100 à 150 lignes / cm,
2) on utilise une encre comprenant de 3 à 25% en poids d'un agent de dilution choisi, en nature et en quantité, de manière à diminuer la viscosité dudit mélange et à obtenir un essuyage sans salissures dudit cylindre par ladite racle.

## Description

### DOMAINE DE L'INVENTION

L'invention concerne l'impression de supports en bobines sur des rotatives par héliogravure.

L'invention concerne plus spécialement l'impression avec des encres à faible teneur en solvants et réticulables par irradiation.

### ETAT DE LA TECHNIQUE

L'héliogravure est un procédé d'impression connu qui met en oeuvre des cylindres gravés en creux et des encres liquides à solvants, les solvants constituant plus de 50% en poids de l'encre.

Par ailleurs, la demanderesse a déjà mis au point un procédé d'impression par héliogravure avec des encres réticulables sous irradiation, comme décrit dans la demande FR-A1-2 720 976.

Dans ce procédé, on utilise des cylindres gravés de profondeur constante et de surface variable, ainsi que des encres à base d'oligomères réticulables par apport d'énergie (rayonnement UV).

### PROBLEME POSE

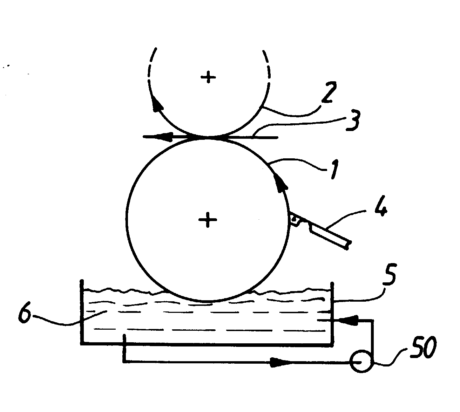

Quel que soit le procédé d'héliogravure utilisé, il met en jeu une racle destinée à éliminer toute trace d'encre à la surface du cylindre gravé en creux, c'est à dire en dehors de celle contenue dans les alvéoles, et cela, avant transfert de l'encre sur le support à imprimer, comme représenté, sous le repère (18) aux figures 1 ou 8 de la demande FR-A1-2 720 976.

Il a été observé que, sur ligne industrielle, dans le procédé mis au point par la demanderesse, la racle n'était pas suffisamment efficace pour éliminer les traces d'encre, de sorte qu'est apparu un problème rédhibitoire de salissure du support imprimé.

Ce problème allait en augmentant avec la vitesse d'impression.

Il a été tenté d'augmenter la pression de la racle sur le cylindre, mais on n'a obtenu un raclage efficace qu'avec une pression de racle très élevée qui entraînait une usure rédhibitoire du cylindre chromé gravé en creux et de ladite racle.

### DESCRIPTION DE L'INVENTION

Le procédé d'impression en héliogravure selon l'invention comprend:
a) l'utilisation de cylindres gravés (1), à alvéoles en creux, et tramés assurant, par rotation desdits cylindres et à l'aide d'une racle (4), un transfert d'encre (6) entre un encrier (5) et un support à imprimer (3) en bande,
b) l'utilisation d'encres liquides fluides (6) à base d'un mélange comprenant des matières colorantes, des monomères et oligomères ainsi que des photo-initiateurs,
c) l'utilisation de moyens de séchage par polymérisation desdits monomères et oligomères, et est caractérisé en ce que:
   1) on utilise des cylindres gravés à linéature élevée ayant de 70 à 150 lignes / cm,
   2) on utilise une encre comprenant de 3 à 25% en poids d'un agent de dilution choisi en nature et en quantité, de manière à diminuer la viscosité de l'encre, à l'adapter à la vitesse d'impression et ainsi à obtenir un essuyage sans salissures dudit cylindre par ladite racle.

En effet, comme montré dans l'exemple, la viscosité de l'encre doit être adaptée à la vitesse d'impression, avec une viscosité d'autant plus basse que ladite vitesse est élevée.

La demanderesse a observé que la solution au problème posé, c'est à dire l'absence de salissure ainsi que la qualité de l'impression obtenue, dépendait étroitement de la combinaison du moyen 1) relatif à la linéature du cylindre gravé et du moyen 2) relatif à la viscosité de l'encre selon l'invention.

Par linéature, on entend le nombre de lignes / cm du cylindre gravé, nombre mesuré selon la direction des alvéoles où le nombre de lignes / cm est le plus grand. A titre d'illustration, une telle direction est représentée par l'axe B-B sur la figure 4a de la demande française FR-A1-2 720 976.

Ainsi selon l'invention, la linéature est environ 1,3 à 2 fois plus élevée que celle habituellement utilisée en impression par héliogravure traditionnelle.

Cela revient à dire qu'il y a un plus grand nombre d'alvéoles au cm² (de 1,3² à 2² fois plus) sur un cylindre gravé selon l'invention que sur un cylindre traditionnel.

Les raisons de l'influence de la linéature sur la solution au problème posé n'apparaissent pas de manière claire.

Le cylindre gravé selon l'invention présente une gravure de profondeur constante, la profondeur des alvéoles en creux étant au plus égale à 10 µm. La demanderesse a en effet observé que, compte tenu notamment de l'extrait sec élevé de l'encre selon l'invention et de sa viscosité relative, une plus grande profondeur d'alvéoles n'était ni nécessaire, ni d'ailleurs favorable à un bon transfert de l'encre selon l'invention.

Par ailleurs, la demanderesse a observé que, pour une vitesse d'impression donnée, il y avait une viscosité limite de l'encre, au-dessus de laquelle les phénomènes de salissure dûs à l'inefficacité partielle de la racle devenaient rédhibitoires.

Ainsi ledit agent de dilution est choisi de manière à avoir une viscosité à la coupe Ford n°4 au plus égale à 1 min pour une vitesse d'impression au plus égale à 50 m/min, au plus égale à 45 s pour une vitesse d'impression au plus égale à 150 m/min, et au plus égale à 30 s pour une vitesse d'impression au plus égale à 200 m/min.

Là aussi le lien entre salissure de l'impression et viscosité de l'encre en relation avec la vitesse d'impression n'est pas clairement expliqué.

Par ailleurs, le procédé selon l'invention doit prendre en compte d'autres exigences, à savoir d'une part la suppression des fours ou séchoirs traditionnels, la réticulation ou cuisson des encres étant effectuée sous irradiation, typiquement sous rayonnement UV, d'autre part la suppression des moyens de traitement des effluents gazeux contenant des solvants, tout en ayant des rejets d'effluents gazeux qui soient en conformité avec les dispositions règlementaires actuelles ou celles prévues dans un proche avenir.

En conséquence, d'une part, ledit agent de dilution comprend essentiellement (i.e. à plus de 80 % en poids) un composé ou mélange de composés, évaporable, éliminable en partie, et de préférence en totalité, durant ledit séchage par polymérisation ou réticulation. D'autre part, lorsque ledit agent de dilution comprend un solvant organique, ledit solvant est à une teneur en poids inférieure à 15 % de ladite encre.

De préférence, ledit agent de dilution est éliminé par évaporation durant le séchage de l'encre sous irradiation.

Cependant, il est possible que ledit agent de dilution comprenne un composé peu ou pas volatil, par exemple un agent tensio-actif associé à de l'eau, et dans ce cas ce tensio-actif restera généralement mélangé à l'encre après cuisson. Cette possibilité suppose que ce tensio-actif soit choisi de manière à ce que la présence d'un tel produit dans l'encre ne diminue pas de manière rédhibitoire les performances de l'impression, et en particulier les diverses solidités d'usage, à l'eau notamment.

En ce qui concerne la quantité d'agent de dilution pour une vitesse d'impression donnée, le domaine utile de l'invention est donc délimité par la double nécessité, d'une part d'utiliser assez d'agent de dilution (au moins 3 % en poids) pour diminuer la viscosité de l'encre au niveau nécessaire pour obtenir des impressions de qualité, exemptes de salissures, et d'autre part de ne pas utiliser trop d'agent de dilution (moins de 25 % en poids) pour limiter les équipements de séchage aux seuls moyens d'irradiation, et cela dans le respect des dispositifs réglementaires en ce qui concerne les rejets d'effluents gazeux chargés de solvants organiques.

### DESCRIPTION DE LA FIGURE

La figure 1 est une représentation schématique en coupe d'un bloc encreur pour impression par héliogravure selon l'invention, comprenant un cylindre gravé (1) muni d'une racle (4). Ce cylindre trempe dans un encrier (5) contenant de l'encre (6), qui a été équipé d'une pompe de circulation (50). Le support à imprimer (3) est appliqué contre le cylindre gravé (1) par un cylindre de contre-pression (2).

### DESCRIPTION DETAILLEE DE L'INVENTION

Bien que l'invention ne soit pas limitée à un mode particulier de séchage sous irradiation, ledit séchage par polymérisation est effectué, de préférence, par séchage sous rayonnement UV.

On utilise de préférence une encre UV comprenant un mélange de monomères réticulables sous UV, d'oligomères, de pigments et de photo-initiateurs adaptés en nature et en quantité pour réticuler sous UV lesdits monomères et oligomères de l'encre. Selon l'invention, on peut utiliser une encre UV radicalaire ou cationique. Une encre UV radicalaire est sensible à la présence d'oxygène, alors qu'une encre UV cationique est sensible à la présence d'eau, d'amines ou de bases. Ces encres peuvent aussi présenter des différences de vitesse de réticulation et de coût.

Il est donc avantageux que, pendant ledit séchage UV d'encres radicalaires, ladite encre à polymériser soit soustraite à l'action de l'oxygène de l'air, c'est à dire soit sous une atmosphère ayant une teneur en oxygène inférieure à 200 ppm.

Ainsi on obtient des encres dont les couches superficielles sont bien polymérisées ou réticulées, ce qui réduit d'autant la présence en surface de monomères et les besoins de photo-initiateurs en excès, et donc les problèmes d'odeur, de fumées qui peuvent apparaître, notamment durant un thermoscellage à haute température. Avec de telles encres à couche superficielle bien réticulée, il est également possible de ne pas utiliser un vernis de surimpression, alors que celui-ci est obligatoire dans beaucoup de cas avec une encre à solvants traditionnelle.

De préférence, on soustrait ladite encre à l'action de l'oxygène de l'air par inertage à l'azote.

Si l'on réticule l'encre en présence d'oxygène, alors il est le plus souvent nécessaire d'appliquer un vernis de surimpression de manière notamment à éviter ou limiter les problèmes occasionnés par la présence de monomères non réticulés dans les couches superficielles de l'encre (problèmes déjà mentionnés d'odeur, de fumées lors du thermoscellage).

En ce qui concerne la nature dudit agent de dilution, ledit agent de dilution peut être constitué par un mélange d'eau et de solvant volatil, de préférence miscible à l'eau.

Ledit solvant volatif est, de préférence, un alcool à température d'ébullition inférieure à 100°C. L'alcool préféré est l'alcool isopropylique. Quand l'alcool isopropylique est utilisé comme additif, la teneur en alcool dans ledit mélange est typiquement comprise entre 15 et 45% en poids.

Dans le cas d'un agent de dilution constitué d'un mélange d'eau et de solvant miscible à l'eau, l'encre selon l'invention forme un mélange stable sans additif complémentaire, probablement sous la forme d'une émulsion stable.

Pour avoir un mélange stable, on peut aussi si nécessaire, faire appel à tout moyen connu comprenant notamment l'incorporation d'un additif ou tensio-actif, ou d'un mélange d'additifs, et/ou l'utilisation d'un moyen mécanique, typiquement, une pompe de circulation de l'encre installée sur l'encrier.

Il va de soi que les encres pour héliogravure selon l'invention doivent présenter, outre une grande stabilité durant toute la phase d'impression, une finesse de dispersion (pour les particules solides de pigments) et d'émulsion (pour les liquides non miscibles entre eux) adaptée à la taille des alvéoles, c'est à dire nettement plus petite que cette dernière.

Selon une autre modalité de l'invention, ledit agent de dilution comprend un mélange d'eau et d'agent tensio-actif choisi de manière à former une émulsion stable dans l'encre et avec des globules de taille inférieure aux dimensions desdites alvéoles.

Ainsi le plus souvent, ledit agent de dilution comprend de l'eau. La demanderesse a observé avec surprise que la présence d'eau dans ledit agent de dilution non seulement n'était pas un handicap mais pouvait aussi constituer une variable pour ajuster la force colorante de l'encre.

En effet, il eut été plus logique de penser que la présence, dans une encre pour héliogravure, d'une phase liquide hétérogène biphasée, en présence d'une phase aqueuse notamment, aurait conduit à des impressions présentant de gros défauts d'aspect (pertes de brillant, impression discontinue, etc...).

Quelle que soit la modalité choisie en ce qui concerne l'agent de dilution, il importe que cet agent de dilution permette d'obtenir une émulsion fine et stable, du moins durant les quelques heures à quelques dizaines d'heures nécessaires à l'impression d'un lot donné de supports en bobines.

Par émulsion fine, on entend une émulsion dont les globules sont de taille au moins inférieure aux dimensions desdites avléoles, et de préférence nettement inférieure à ces dimensions, typiquement 3 fois moins grande que la profondeur de ces alvéoles. Par ailleurs, la taille de ces globules est également nettement inférieure au pouvoir de résolution de l'oeil.

En pratique, au microscope optique, on ne voit qu'un fond finement divisé, les globules étant essentiellement de taille inférieure 10 µm.

Il est avantageux pour obtenir une impression sans salissures et de qualité constante, de réguler la température de l'encre dans l'encrier, et de la maintenir à une température stabilisée, notamment en thermostatant l'encrier.

En effet, pour résoudre le problème posé, il a été observé qu'il était avantageux d'avoir une encre de viscosité la plus faible possible, et donc d'opérer à la température la plus élevée possible, avec cependant une limite supérieure de température correspondant à celle où l'un des composants de l'encre commence à s'évaporer, ou bien à celle où l'encre commence à sécher sur le cylindre gravé avant son transfert sur le support à imprimer. Ainsi en particulier dans le cas où ledit agent de dilution est comprend de l'alcool isopropylique, la température de l'encre dans l'encrier est stabilisée à une température au plus égale à 30°C, et généralement comprise entre 20 et 30°C.

### EXEMPLE DE REALISATION

Les essais ont été réalisés sur ligne industriellle avec un bloc encreur - typiquement schématisé à la figure 1 - et à partir d'une encre utilisée dans l'exemple de la demande française n° 94/07201 au nom de la demanderesse, que nous appelerons « encre de base», et en utilisant un cylindre gravé chromé en surface avec des alvéoles de profondeur constante de 8 µm et de linéature égale à 80 lignes/cm.

On a préparé des encres selon l'invention (encre UV radicalaire) en incorporant à l'encre de base un agent de dilution constitué par une solution aqueuse d'alcool isopropylique (65 parties d'eau et 35 parties d'alcool - en poids).

Les essais ont porté sur le pourcentage pondéral de cette solution aqueuse dans l'encre finale (= encre de base + agent de dilution) et sur la vitesse d'impression (en m/min).

Les impressions ont été réalisées en maintenant la température de l'encrier à 28°C.

Les bandes imprimées ont été examinées visuellement : la présence d'une plus ou moins grande salissure a été notée sur 3 niveaux : « 0 » pour un résultat acceptable (produit commercialisable sans risques de réclamations), « + » pour un bon résultat, et « - » pour un mauvais résultat.

| Résultats | | % de solution aqueuse dans l'encre | | | |
|---|---|---|---|---|---|
| | | 0 | 5 | 12 | 22 |
| Vitesse | 40 | 0 | + | + | + |
| d'impression | 80 | - | 0 | + | + |
| (m/min) | 120 | - | - | 0 | + |
| | 180 | - | - | - | 0 |

### AVANTAGES DE L'INVENTION

La combinaison de moyens de l'invention, relatifs au cylindre gravé et à l'encre réticulable sous rayonnement, permet :
- d'une part d'effectuer un transfert d'encre exempte de défauts entre l'encrier et le support à imprimer, grâce à un bon rendement de transfert entre alvéoles du cylindre gravé et support à imprimer, et suite à la suppression du problème des salissures,
- d'autre part d'obtenir des impressions coloristiquement comparables à celles obtenues par le procédé d'héliogravure classique,
- enfin d'obtenir une impression ayant des solidités d'usage (tenue à l'eau, aux graisses, aux solvants, etc....) semblables à celles obtenues par le procédé d'héliogravure traditionnel, en particulier lorsque la polymérisation de l'encre est réalisée à l'abri de l'oxygène.

En outre, l'invention permet d'avoir des lignes d'impression d'encombrement et de longueur réduite, par suppression des équipements de séchage traditionnels sur chaque bloc d'encrage, et par suppression des installations de traitement des effluents gazeux, ce qui correspond à une diminution importante du coût de l'investissement et des coûts de démarrage/arrêt de production suite à la diminution importante de la longueur de support engagé dans la ligne d'impression.

L'invention présente donc un intérêt technologique considérable dans le domaine de l'impression par héliogravure.

## Revendications

1. Procédé d'impression en héliogravure comprenant, a) l'utilisation de cylindres gravés (1), à alvéoles en creux, et tramés assurant, par rotation desdits cylindres et à l'aide d'une racle (4), un transfert d'encre (6) entre un encrier (5) et un support à imprimer (3) en bande, b) l'utilisation d'encres liquides fluides (6) à base d'un mélange comprenant des matières colorantes, des monomères et oligomères ainsi qu'un photo-initiateur, c) l'utilisation de moyens de séchage par polymérisation desdits monomères et oligomères, caractérisé en ce que:
1) on utilise des cylindres gravés à linéature élevée ayant de 70 à 150 lignes / cm,
2) on utilise une encre comprenant de 3 à 25% en poids d'un agent de dilution choisi, en nature et en quantité, de manière à diminuer la viscosité de l'encre, à l'adapter à la vitesse d'impression et ainsi à obtenir un essuyage sans salissures dudit cylindre par ladite racle, ledit agent de dilution comprenant un composé ou mélange de composés, évaporable, éliminable en partie, et de préférence en totalité, durant ledit séchage par polymérisation.

2. Procédé selon la revendication 1 dans lequel ledit séchage par polymérisation est effectué par séchage sous rayonnement UV d'encres UV radicalaires ou cationiques.

3. Procédé selon la revendication 2 dans lequel, pendant ledit séchage UV, ladite encre à polymériser est soustraite à l'action de l'oxygène de l'air, lorsque ladite encre est une encre UV radicalaire.

4. Procédé selon la revendication 3 dans lequel on soustrait ladite encre à l'action de l'oxygène de l'air par inertage à l'azote.

5. Procédé selon une quelconque des revendications 1 à 4 dans lequel ledit agent de dilution est constitué par un mélange d'eau et de solvant volatil.

6. Procédé selon la revendication 5 dans lequel ledit solvant volatif est un alcool à température d'ébullition inférieure à 100°C, et, de préférence, l'alcool isopropylique.

7. Procédé selon une quelconque des revendications 1 à 6 dans lequel ledit agent de dilution comprend un solvant organique, ledit solvant étant à une teneur en poids inférieure à 15 % de ladite encre.

8. Procédé selon la revendication 1 dans lequel ledit agent de dilution comprend un mélange d'eau et d'agent tensio-actif choisi de manière à former une émulsion stable dans l'encre et avec des globules de taille inférieure aux dimensions desdites alvéoles.

9. Procédé selon une quelconque des revendications 1 à 8 dans lequel ledit agent de dilution est choisi de manière à avoir une viscosité à la coupe Ford n°4 au plus égale à 1 min pour une vitesse d'impression au plus égale à 50 m/min, au plus égale à 45 s pour une vitesse d'impression au plus égale à 150 m/min, et au plus égale à 30 s pour une vitesse d'impression au plus égale à 200 m/min.

10. Procédé selon une quelconque des revendications 1 à 9 dans lequel ladite encre dans l'encrier est maintenue à une température stabilisée.

11. Procédé selon une quelconque des revendications 1 à 12 dans lequel la profondeur desdites alvéoles en creux est au plus égale à 10 µm.
